Europäisches Patentamt

European Patent Office

Office européen des brevets

(19)

(11) Veröffentlichungsnummer : **0 287 874 B1**

# EUROPÄISCHE PATENTSCHRIFT

(12)

(45) Veröffentlichungstag der Patentschrift :
24.07.91 Patentblatt 91/30

(51) Int. Cl.⁵ : **B65G 15/64**

(21) Anmeldenummer : 88105249.2

(22) Anmeldetag : 31.03.88

(54) **Vorrichtung zum Erfassen und Steuern des Geradlaufs eines angetriebenen Transportbands.**

(30) Priorität : 09.04.87 DE 3711916

(43) Veröffentlichungstag der Anmeldung :
26.10.88 Patentblatt 88/43

(45) Bekanntmachung des Hinweises auf die
Patenterteilung :
24.07.91 Patentblatt 91/30

(84) Benannte Vertragsstaaten :
CH FR GB IT LI NL

(56) Entgegenhaltungen :
DE-A- 3 439 456
DE-B- 2 601 430
US-A- 4 557 372

(73) Patentinhaber : Otto Hänsel GmbH
Lister Damm 19
W-3000 Hannover (DE)

(72) Erfinder : Natusch, Martin
Schuhmacherstrasse 36
W-3008 Garbsen 6 (DE)
Erfinder : Horn, Eberhard
Fleutjenburg 2
W-3057 Neustadt 2 (DE)

(74) Vertreter : Rehberg, Elmar, Dipl.-Ing.
Postfach 3162 Am Kirschberge 22
W-3400 Göttingen (DE)

**Beschreibung**

Die Erfindung bezieht sich auf eine Vorrichtung zum Erfassen und Steuern des Geradlaufs eines angetriebenen Transportbands mit den im Oberbegriff des Anspruches 1 angegebenen Merkmalen. Transportbänder werden auf nahezu allen Gebieten der Technik eingesetzt; sie dienen in der Regel dazu, auf ihnen befindliche Warenstücke zu transportieren. Wenn Warenstücke reihen- und/oder linienförmig auf solchen Transportbändern transportiert werden, kommt es in besonderer Weise darauf an, den Geradlauf des Transportbands einzuhalten, damit die Warenstücke beispielsweise in einer Weiterverarbeitungsstation ordnungsgemäß aufgenommen und/oder behandelt werden können.

Eine Vorrichtung der eingangs beschriebenen Art ist aus der US-A-4 557 372 bekannt, wobei in der Fläche des Transportbands eine sich in Laufrichtung ergänzende Markierung vorgesehen ist, die aus einem anderen Material als das transparente Material des Transportbands besteht. Die bekannte Vorrichtung weist ferner eine Abtasteinrichtung und eine Steuereinrichtung auf. Diese bekannte Vorrichtung hat den Nachteil, daß ihre Wirkung bei einer Verschmutzung des Bands beeinträchtigt wird bzw. letztlich in Fortfall kommt. Wenn mit einem solchen Band beispielsweise Schokoladestücke oder andere Artikel der Süßwarenindustrie gefördert werden, bei denen sich eine entsprechende Verschmutzung des Bandes nicht vermeiden läßt, besteht für die Abtasteinrichtung keine Möglichkeit mehr, zwischen den Markierungen und dem dann in einer Spur völlig verschmutzten Transportband zu unterscheiden.

Aus der DE-A-34 39 456 ist eine Steuervorrichtung zum Ausrichten eines um zwei Rollen umlaufenden Transportbands gezeigt und beschrieben, bei dem zwei Mikroschalter vorgesehen sind, die ausschließlich mit den beiden Kanten des Transportbands zusammenarbeiten und die eine Steuereinrichtung im Rechtssteuersinn bzw. Linkssteuersinn beeinflussen. Damit wird in nachteiliger Weise die Kante des Transportbands nicht nur abgetastet, sondern auch durch Schleifen an den Mikroschaltern beeinträchtigt, so daß die Lebensdauer des Transportbands hierdurch in nachteiliger Weise durch die Berührung verringert wird. Durch die Verwendung der beiden Mikroschalter und die im Rechtssteuersinn bzw. Linkssteuersinn wirkende Steuereinrichtung ist es zur Beibehaltung eines Geradlaufs erforderlich, laufend hin und her zu schalten, wodurch jeweils wechselnde Beanspruchungen auf das Transportband einwirken. Das Transportband weist auch in seiner Fläche keine zusätzliche Markierung auf.

Der Erfindung liegt die Aufgabe zugrunde, eine Vorrichtung der eingangs beschriebenen Art derart weiterzubilden, daß die Beanspruchung des Transportbands und der Steuereinrichtung herabgesetzt wird und die ordnungsgemäße Funktion auch bei einer Verschmutzung der Oberfläche des Transportbands gegeben ist.

Erfindungsgemäß wird dies durch die im Anspruch 1 angegebenen Merkmale erreicht. Es sind hier drei berührungslose Fühler in der angegebenen Weise angeordnet und mit der Steuereinrichtung verbunden. Dies erbringt den Vorteil, daß der Mittelfühler zum Konstanthalten des Geradlaufs und zum Stillsetzen des Antriebs des Transportbands ausgebildet sein bzw. benutzt werden kann. Wenn lediglich dieser Mittelfühler ein Signal abgibt, zeigt dies an, daß ein ordnungsgemäßer Geradlauf vorliegt und daher die Steuereinrichtung weder im Linkssteuersinn noch im Rechtssteuersinn eingeflußt werden muß. Hierdurch wird die Steuereinrichtung erheblich weniger betätigt als bei einer Steuereinrichtung, die nur über zwei Fühler angesteuert wird. Erst mit der Anordnung des Mittelfühlers wird gleichsam eine Ruheposition geschaffen, in der die Steuereinrichtung nicht angesteuert wird, so daß deren Betätigungshäufigkeit erheblich herabgesetzt ist, was sich in einer langen Gebrauchsdauer der Vorrichtung äußert. Darüberhinaus aber sind die drei Fühler und damit auch der Mittelfühler zum Stillsetzen des Antriebs des Transportbands ausgebildet. Wenn keiner der drei Fühler ein Signal abgibt, dann zeigt dies an, daß das Transportband verlaufen ist, so daß dessen zerstörung droht, wenn der Antrieb fortgesetzt wird. Schließlich ist es zur Lösung der Aufgabe wichtig, daß die Fühler materialselektiv ausgebildet sind. Es werden hier die unterschiedlichen Werkstoffeigenschaften zwischen dem Grundmaterial des Transportbands und demjenigen der Markierungen ausgenutzt. Dies hat den Vorteil, daß sich auch eine Verschmutzung des Transportbandes auf die Funktionsfähigkeit nicht negativ auswirken kann.

In bevorzugter Ausführungsform können als berührungslose Fühler Näherungsschalter vorgesehen sein. Auch solche Fühler müssen jedoch in allen Fällen materialselektiv arbeiten.

Die Erfindung wird anhand bevorzugter Ausführungsbeispiele weiter verdeutlicht und beschrieben. Es zeigen:

Figur 1     eine erste Ausführungsmöglichkeit der Vorrichtung und
Figur 2     verschiedene Darstellungen zur Erläuterung der Arbeitsweise der Vorrichtung.

In den Figuren ist ein Transportband 1 teilweise ganz, teilweise in Abschnitten, dargestellt, welches um eine Antriebsrolle 2, eine Umlenkrolle 3 und eine Spannrolle 4 geführt ist. Diese Anordnung ist nur beispielhaft zu verstehen. Das Transportband 1 wird in Richtung eines Pfeils 5 angetrieben und bewegt.

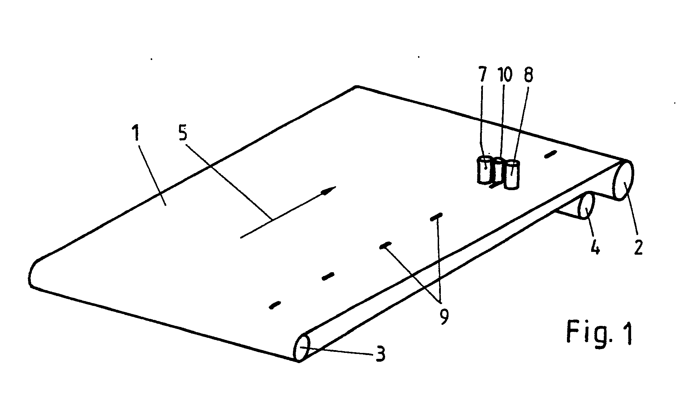

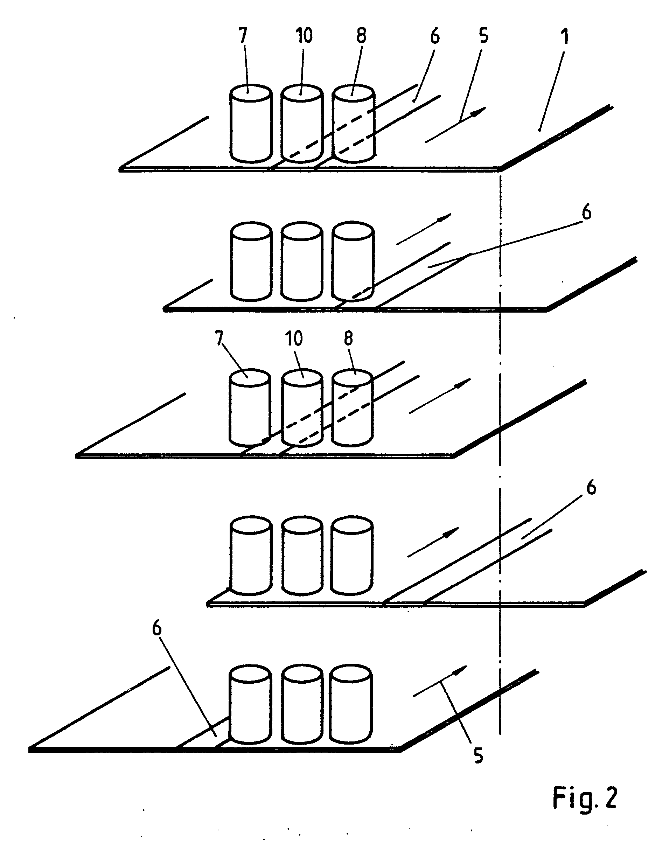

Das Transportband 1 ist im Bereich seiner Oberfläche mit einer umlaufend durchgehenden Markierung 6 (Figur 2) oder mit einzelnen Markierungsabschnitten 9 (Figur 1) versehen. Die Markierung 6 bzw. die Markierungsabschnitte 9 sind aus einem unterschiedlichen Material gegenüber dem Material des Transportbands 1 ausgebildet. Es kann sich beispielsweise um einen eingewebten Kettfaden aus einem von dem Gewebematerial des Transportbands abweichenden Material handeln. Auch eine einfache Lochung in einem Stahlband ist möglich. Der Markierung 6 bzw. den Markierungsabschnitten 9 sind drei berührungslose Fühler 7, 8, 10 zugeordnet, wobei der Fühler 7 links und der Fühler 8 rechts von der Markierung 6 angeordnet sind. Der Abstand der Fühler 7 und 8 voneinander kann je nach Betriebsweise der Breite der Markierung 6 entsprechen. Zu den beiden Fühlern 7 und 8 gehört eine nicht dargestellte Steuereinrichtung, mit deren Hilfe die Laufrichtung des Transportbands 1 nach links bzw. rechts geändert werden kann. Der Mittelfühler 10 ist dem Geradeauslauf zugeordnet, d.h. wenn nur der Mittelfühler 10 ein Signal abgibt, wird damit angezeigt, daß Geradlauf vorliegt und somit die Steuereinrichtung keine Steuerbewegung ausführen muß, wie dies in der obersten Darstellung in Figur 2 wiedergegeben ist. Verläuft das Transportband 1 dagegen nach rechts, wie es in der von oben folgenden Darstellung angedeutet ist, dann gibt der Fühler 8 ein Signal ab, wobei — je nach Verlauf des Transportbands 1 — der Mittelfühler 10 sein Signal nicht mehr abgibt. In diesem Fall wird eine Gegensteuerung eingeleitet, und zwar in dem Sinn, daß das Transportband 1 durch die Steuereinrichtung veranlaßt wird, nach links zu verlaufen, bis die Markierung wieder ausschließlich unter dem Mittelfühler 10 zu liegen kommt. Entsprechendes gilt für das Verlaufen des Transportbands 1 nach links in den Bereich des Fühlers 7 hinein, was in der mittleren Position der Figur 2 dargestellt ist.

Anhand der beiden unteren Darstellungen der Figur 2 wird deutlich, daß die Markierung 6 aus dem Bereich sämtlicher Fühler 7, 8, 10 herauslaufen kann. Dies möge aufgrund besonderer Umstände möglich sein. In einem solchen Fall sendet keiner der Fühler 7, 8, 10 ein Signal aus, so daß das Fehlen jeglicher Signale in dem Sinne benutzt werden kann, den Antrieb des Transportbands stillzusetzen und damit das Transportband vor Beschädigungen zu schützen.

## Patentansprüche

1. Vorrichtung zum Erfassen und Steuern des Geradlaufs eines angetriebenen Transportbands, das in seiner Fläche eine sich in Laufrichtung erstreckende oder ergänzende Markierung (6, 9) aufweist, die aus einem anderen Material als das Transportband (1) besteht, mit einer Abtasteinrichtung und einer Steuereinrichtung, dadurch gekennzeichnet, daß die Abtasteinrichtung drei berührungslose Fühler (7, 8, 10) aufweist, wobei der eine Fühler (7) links von der Markierung (6, 9) angeordnet und mit der Steuereinrichtung im Rechtssteuersinn verbunden und der andere Fühler (8) rechts von der Markierung (6, 9) angeordnet und mit der Steuereinrichtung im Linkssteuersinn verbunden ist, und daß zwischen den beiden rechts und links von den Markierungen (6, 9) angeordneten Fühlern (8, 7) ein Mittelfühler (10) zum Konstanthalten des Geradlaufs und zum Stillsetzen des Antriebs des Transportbands (1) vorgesehen ist, und daß die berührungslosen Fühler (7, 8, 10) materialselektiv ausgebildet sind.

2. Vorrichtung nach Anspruch 1, dadurch gekennzeichnet, daß als berührungslose Fühler (7, 8, 10) Näherungsschalter vorgesehen sind.

## Claims

1. Apparatus for recording and controlling the straight run of a driven transport belt which has in its surface a marking (6, 9) which extends continuously or in a complementary manner in the running direction and which is composed of a different material from the transport belt (1), having a scanning device and a control device, characterised in that the scanning device has three contactless sensors (7, 8, 10), one sensor (7) being arranged to the left of the marking (6, 9) and being connected to the control device in the sense of steering to the right, and another sensor (8) being arranged to the right of the marking (6, 9) and being connected to the control device in the sense of steering to the left, and in that a central sensor (10) is provided between the two sensors (8, 7), arranged to the right and to the left of the markings (6, 9), for keeping the straight run constant and for stopping the drive of the transport belt (1), and in that the contactless sensors (7, 8, 10) are constructed to be selective in terms of material.

2. Apparatus according to Claim 1, characterised in that proximity switches are provided as contactless sensors (7, 8, 10).

EP 0 287 874 B1

## Revendications

1. Dispositif pour saisir et contrôler la rectitude de circulation d'une courroie transporteuse motorisée qui présente dans sa surface un marquage (6, 9) s'étendant dans le sens de la circulation ou complémentairement à celui-ci, ce marquage étant constitué d'un matériau autre que celui de la courroie transporteuse (1), avec un dispositif de palpage et un dispositif de commande, **caractérisé** en ce que le dispositif de palpage présente trois palpeurs sans contact (7, 8, 10), un des palpeurs (7) étant disposé à gauche du marquage (6, 9) et étant relié au dispositif de commande dans le sens d'une commande vers la droite et l'autre palpeur (8) étant disposé à droite du marquage (6, 9) et étant relié au dispositif de commande dans le sens d'une commande vers la gauche, et en ce qu'il est prévu entre les deux palpeurs (8, 7) disposés à droite et à gauche du marquage (6, 9) un palpeur intermédiaire (10) pour maintenir constante la rectitude de circulation et pour mettre à l'arrêt l'entraînement de la courroie transporteuse (1), et en ce que les palpeurs sans contact (7, 8, 10) sont sélectifs vis-à-vis des matériaux.

2. Dispositif selon la revendication 1, caractérisé en ce qu'on prévoit comme palpeurs sans contact (7, 8, 10) des détecteurs de proximité.

4

Fig. 1

Fig. 2